# EUROPEAN PATENT APPLICATION

(11) **EP 1 832 901 A1**
(43) Date of publication of application: **12.09.2007**
(21) Application number: 07250935.9
(22) Date of filing: 06.03.2007
(51) Int. Cl.: G02B 5/30, G02B 5/22

(54) **Security film**

(30) Priority: 09.03.2006 US 780765 P
(71) Applicant: CPFilms Inc., Fieldale, VA 24089 (US)
(72) Inventor: Port, Anthony Brian, Collinsville Virginia 24078 (US); Newbitt, David, Southampton Hampshire SO16 8LN (GB)
(74) Representative: Stanley, Michael Gordon

(57) **Abstract**

An optically active film laminate (10) for providing colour shift effects in the visible and non-visible spectrums and which comprises a transparent film substrate (11), typically PET, which at least in part has been dyed to a dark colouration by dye or dyes applied to one side of the substrate, and a CLC coating (13) is layered over said dyed side of the film substrate (11), and preferably the other side of the film has a reflective aluminium layer (12) thereon.

## Description

### Field

This invention relates to film which may be used in the security and anti-counterfeit field and in particular for the manufacture of security threads, ID Cards, documents and others.

### Background of the Invention

Cholesteric (or chiral nematic) liquid crystal, hereinafter CLC, technology is used in a number of security and anti-counterfeit products. Such materials are described in US Patent 6899 824. These materials form structures that act as a circular polarizer of light. Depending on the scale and structure of the liquid crystal the material will reflect a particular wavelength of light that is either of left or right handed (LH or RH) circular polarization. It will transmit light of that wavelength of opposite handedness along with all other light of other wavelengths of either handedness. A CLC material will appear one colour in reflection and the complimentary colour in transmission. The reflected colour will change with the angle of viewing (moving to shorter wavelengths as the viewing angle becomes more oblique) and will change with temperature as the crystal structure expands and contracts. The reflected colours are most spectacular and brilliant against a dark / black background.

The characteristics of CLC materials are useful in security products for a number of reasons. The angle and temperature dependence of the reflected colour can not be reproduced by photocopier or digital printing techniques. The intensity of reflected colour and dramatic colour changes (when used against a black background) provide an obvious and unambiguous "overt" security effect. The reflected light is circularly polarised and of a particular handedness which is rare in nature but which can be analysed rapidly and automatically using optical sensors and circular polarizers i.e. machine readable, so making a "covert" security feature. Additional covert features are possible if CLC structure is modified such that the reflected light can be made to fall outside the visible spectrum (UV or IR).

US patent 6733 689 describes CLC materials which are printed onto a transparent PET (polyethyleneterepthalate) substrate and then overcoated with full tone black ink.
The coloured nature of the liquid-crystalline (cholesteric) layer is emphasized by the coating with the black printing ink. The viewer cannot see any printed picture hidden in the multilayer structure either in incident light or in transmitted light. However, the picture becomes visible on illumination with a UV lamp.

US 6953611 describes CLC materials which contain two chiral monomers, one of which is photopolymerisable and changes its twisting powers on irradiation with the other not being susceptible. Masking a coating containing these two monomers, followed by irradiation and curing produces a hidden design which is only observable through circular polarizers. The patent indicates that the CLC material may be printed onto a dark or black metallized PET substrate. There is no disclosure of how the PET is made black or of the nature of the metallized layer.

A disadvantage of CLC coatings formulations is that they are very expensive especially those which contain the highest concentration of chiral monomers (to produce the shortest wavelength reflectors). Furthermore, the effectiveness of the CLC coatings depends on how well the monomers self- assemble on the substrate before chemical reactions and film forming are initiated. For reasons that are not fully understood some monomer mixtures assemble better than others and some substrates are better than others in aiding / promoting assembly whereas other substrates seem to actively inhibit assembly of CLC structures. In some systems the substrate has to be "rubbed" to promote assembly, in others lengthy annealing treatments are needed to promote crystallisation.

Another problem is that substrates made dark through the use of black pigments added to the PET, or in a black coating such as an ink, typically use carbon black pigments which strongly absorb UV and IR light and may interfere with security systems that are covertly based on UV and IR light. Furthermore a pigmented film substrate or substrate having a pigment coating thereon, often has some level of micro-roughness on the surface and this may interfere with the self assembly of CLC coatings.

The present invention provides an improved film laminate having a CLC coating and which is suitable for use in security products. The film laminates can be used when slit to an appropriate width as security threads in paper currency or high value documents such as share documents, securities and the like. They can also be used as components of labels or packaging for high value products as part of the brand protection, anti - counterfeit and anti - theft strategies. The laminates are capable of providing both a highly visible, dramatic and unambiguous overt colour shift effect and simultaneously a secure covert and machine - readable effect.

### Statements of Invention

According to the present invention there is provided an optically active film laminate comprising a transparent film substrate which at least in part has been dyed to a dark colouration by dye or dyes applied to one side of the substrate, and a CLC coating is layered over said dyed side of the film substrate.

In this form, the laminate provides colour shifts in the visible spectrum.

Preferably the other side of the film has a reflective metallized layer formed thereon. This produces a laminate which produces covert machine readable colour shifts

The polymeric film substrate may comprise one of polycarbonate, acrylic, polypropylene and PET , the preferred film being PET. The film substrate is preferably a PET (polyethyleneterephthalate) film about 2 mil (50 microns) thick and which may contain a UV absorbing material as is disclosed in US 6221 112.

The metallized layer is preferably a vacuum deposition of any suitable metal, preferably aluminum or an aluminum alloy so as to reflect a portion of the light back through the polymeric substrate. The reflective aluminium coating is useful in security threads for paper currency, where for example, the security threads are made to go in and out of one surface of the paper whilst being invisible from the second surface. The thread may be aligned so that the aluminium coating is facing this second surface and reflects any light that is transmitted through the paper to the thread so that when the currency is viewed against a light the thread is not visible from the second side but clearly visible in sections from the first side. This security feature is enhanced by partial de-metallization to reveal designs or micro-text.

Preferably the aluminium layer is opaque and the surface resistivity of the PET/alumium layer should lie between 2-3 ohms per square.

The CLC coating may be in coated or printed form on the film substrates and may be coated all-over or in specified areas typically in patterned forms to create novel overt and covert optical features for security and anti-counterfeit applications. Using CLC coating in printed patterns makes the most economical use of these materials.

The dry film thickness of the CLC layer should ideally be optimised for the desired reflected colour. It is thought that the CLC coating optimally reflects a particular wavelength of light when it contains about seven turns of a helix with a pitch of that particular wavelength. Thus to reflect visible light with wavelengths in the range 400nm to about 750nm the coating needs to be approximately in the range 2.8 to 5.3 microns (2800nm to 5300nm), to reflect in the near visible Infra Red the coating needs to be about 6.5 microns thick , and for UV light about 2.0 microns in thickness.

The wavelength of maximum reflection of light may be adjusted by mixing solutions with different concentrations of chiral monomers.

It has been found that PET film substrate that has been coloured through a surface impregnation dyeing process, is ideally suited for the self- assembly of CLC coatings layered onto the same side of the film, such that additional processes such as annealing or rubbing of the surface is unnecessary. Preferably, the dying process is of the type described in EP 0739274 and US 6221112 and which is applied to said other side of the substrate only.

The dye may be coated onto the film substrate in a continuous coating or in a specific pattern or form. When dyed in specified areas, the dyed patterns may be aligned relative to any patterns or forms in the CLC layer.

Preferably , the black/grey colouration results from a mixture of red, blue and yellow dyes and the dyed film has a visible light transmission of about 5%. The visible light transmission is calculated using CIE Standard Observer (CIE 1924 1931) and D65 Daylight. The use of red, blue and yellow dyes provided a black film that is transparent in the near UV ranges (320-400nm) and the near IR (780-2500nm) and is of low transmission only in the visible ranges (400-780nm). If the dye is coated in a particular pattern then preferably the CLC coating is a continuous coating. The reflected colour from the CLC coating is clearly visible over the dyed areas but hardly visible to the naked eye over undyed areas.

Another embodiment comprises an optically active film laminate comprising a transparent film substrate which has been dyed to a dark colouration by dye or dyes applied to said one side, and a CLC coating is formed as a continuous layer on said dyed side of the film substrate, the other side of the film has a reflective metallized layer thereon, wherein the CLC coating is provided with a transparent polymeric overlayer which may be impregnated with patterns or specific signs.

According to a second aspect of the present invention, there is provided a method of manufacture of an optically active film composite in which method:
a transparent film substrate is dyed by surface impregnation to a dark colouration on a first side thereof,
a liquid composition containing chiral monomers is coated over the dyed side of the substrate, and the coating dried and cured.

Preferably the film substrate is dyed using the process described in US 6221112 and the film substate is dyed to a black colouration using red, blue and yellow dyes.

The film substrate may be coated on its other side by a metallized layer deposited by vacuum deposition.

### Description of the Drawings

The Invention will be described by way of Example only and with reference to the accompanying drawings in which:
- Fig.1: is a schematic drawing a first embodiment of the Invention showing the effect of reflected white light,
- Fig.2: shows the embodiment of Fig.1 and the effect of non visible light,
- Fig. 3: is a schematic drawing of a second embodiment of the Invention
- Fig. 4: is a schematic drawing of another embodiment of the Invention,
- Fig. 5: is yet another embodiment of the Invention,
- Fig.6: is a further embodiment of the Invention,
- Fig.7: is yet a further embodiment of the Invention,
- Fig 8: is still yet another embodiment of the Invention, and
- Fig.9: is a graph of wavelength of peak reflection for a CLC Coating containing differing amounts of two monomers

### Detailed Description of the Invention.

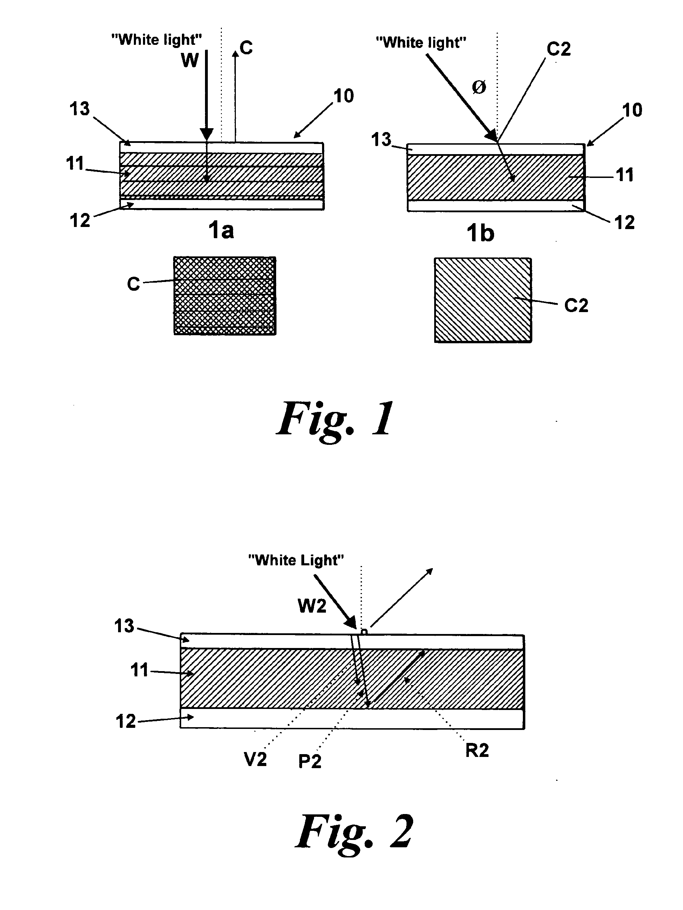

With reference to Fig. 1, there is shown a cross-section through a security film laminate 10 according to a first aspect of the present invention. The security film laminate 10 comprises a PET film substrate 11 approximately 2mil (50 microns) in thickness and which has not been surface treated to improve the adhesion of further coatings. PET film with non treated surfaces is available from Toray Industries under the grade XG200. PET films that have been surface treated, typically for enhanced print reception, adhesion, ease of winding, may inhibit the crystallisation or self assembly process during the formation of CLC coatings.

The PET film substrate 11 is dyed black or grey by a surface impregnation technique which is described in described in EP 0739274 and US 6221112 . The process may also be used for the impregnation of a UV absorber into the film depending upon its final end use. The dying process produces films that are especially useful for use with CLC coatings in that coatings crystallise on the dyed PET without further treatment. In this process, mixtures of red, blue and yellow disperse dyes are impregnated into the surface of a 2 mil XG200 PET film to produce neutral blacks or greys of various levels of transmission. Such a film may have a VLT of about 5%).

The film substrate 11 on its non-dyed surface is covered with a metallised layer 12, which is preferably opaque and reflects light back through the film 11. Examples of suitable metals are copper, silver, gold, aluminium etc.. The preferred metal layer 12 comprises aluminium deposited by evaporative vacuum coating onto the non-dyed surface with a coating weight of aluminium such that it had a surface resistance of 2 - 3 ohms / square.

The film substrate 11 on its dyed side is coated with a layer 13 comprising cholesteric liquid crystals that reflect light of at least one wavelength. A convenient way to prepare CLC coatings with different reflected colours is to use mixtures of functionalised nematic and chiral nematic liquid crystal monomers. Under suitable conditions the monomers self assemble into a chiral nematic (or CLC) structure and then the structure is stabilized by reaction of the functional groups to form a polymeric material. Acrylate or methacrylate functional groups can be made to polymerise when exposed to UV light and in the presence of a suitable photoinitiator.

Increasing concentrations of the chiral component will produce helical structures of reduced pitch that will reflect light of shorter wavelengths. Conversely, reducing the concentration of the chiral component will increase the pitch and reflect longer wavelengths of light.

Individual components or mixtures of nematic and chiral nematic acrylate functionalised monomers for forming the layer 13 are available commercially together with photoinitiators and optionally solvents. BASF supplies Lumogen S250 and Lumogen S750 for this purpose. Merck Chemicals Ltd supplies RMS05 - 133, RMS05 - 188 and RMS05 - 159 as fully formulated coatings.

The Cholesteric (or chiral nematic) liquid crystal materials form structures that act as a circular polarizer of light. Depending on the scale and structure of the liquid crystal the material will reflect a particular wavelength of light that is either of left or right handed (LH or RH) circular polarization. It will transmit light of that wavelength of opposite handedness along with all other light of other wavelengths of either handedness. A CLC material will therefore appear one colour in reflection and the complimentary colour in transmission. The reflected colour will change with the angle of viewing (moving to shorter wavelengths as the viewing angle becomes more oblique) and will change with temperature as the crystal structure expands and contracts. For example, RMS05 - 133 reflects red when viewed normal to the surface and changes to green when viewed obliquely. RMS05 - 159 reflects blue when viewed normal to the surface and changes to colourless (UV) when viewed obliquely. The reflected colours are viewed against the black/grey PET layer 11.

An illustration of the effect of viewing angle is shown in Fig. for a CLC layer 13 containing only one CLC component. In 1a, white light W (containing no IR or UV light) is shown normal to the CLC layer 13. The coating 13 reflects light of a select colour C of one polarization, for example reddish light , the visible components of the transmitted light are absorbed by the black dyed PET substrate 11. If the viewing angle is changed to Ǿ degrees then the reflected light has a different colour C2, for example a green wavelength.

Other colour changes may occur depending upon the chosen chiral components and the choice of light, eg. IR, UV, white or mixtures thereof As can be seen in Fig.2, if the security film is exposed to white light W2 containing both visible and a non visible light, for example UV light, then assuming the CLC coating layer 13 reflects RH circularly polarized light of a particular range of UV wavelengths, then the CLC layer 13 will transmit visible light V2, and LH polarised light P2 of the UV wavelengths. The black PET layer will absorb the visible light V2 and may permit transmission of the LH polarised UV light P2, which will be reflected at the aluminium layer 12. The reflected UV light R2 is **RH** circularly polarized UV light which will not be transmitted back through the CLC coating (which is reflective to this type of light). So, if the film laminate in Figure 2 is illuminated with light that has a near (long wave) UV component and viewed through a UV sensitive detector then a response will appear as the viewing angle is increased. At this point if circular polarizers are positioned between the film and the detector then the response will appear and disappear with insertion of polarizers of opposite handedness.

In order to improve the transmission of non-visible light through black substrate 11, the PET is preferably dyed black by use of a mixture of red, blue and yellow dyes to achieve neutral black film that is transparent in the near UV (320 - 400 nm) and near IR (780 - 2500nm) and only of low transmission in the visible wavelengths (400 - 780nm).

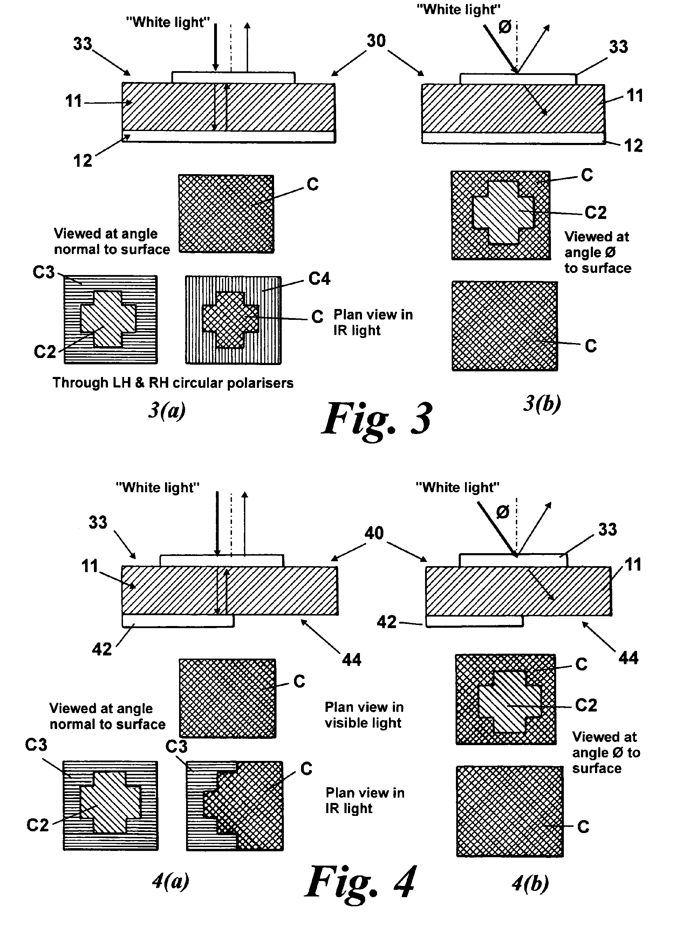

The characteristics of CLC materials are useful in security products for a number of reasons. The angle and temperature dependence of the reflected colour can not be reproduced by photocopier or digital printing techniques. The intensity of reflected colour and dramatic colour changes (when used against a black background) provide an obvious and unambiguous "overt" security effect. The reflected light is circularly polarised and of a particular handedness and can be analysed rapidly and automatically using optical sensors and circular polarizers i.e. machine readable, so making a "covert" security feature. Additional covert features are possible if CLC structure is modified such that the reflected light can be made to fall outside the visible spectrum (UV or IR).
With reference now to Fig. 3, there is shown a security film laminate 30 which is substantially identical to the laminate 10 with the exception that the CLC layer 33 is printed or coated and/or impregnated in patterned forms to create novel overt and covert optical features for security and anti-counterfeit applications. In the present example the CLC layer 33 is printed in the forms of crosses but other shapes may be chosen as is desired. The CLC layer 33 shows an example of a CLC material containing a lower chiral monomer which reflects light in the near IR wavelengths when viewed normal to the surface and which reflects visible wavelengths when viewed at angle Ǿ.

In Fig. 3a , when viewed normal to the surface under visible light containing near IR wavelength, visible light transmitted through the CLC layer 33 is absorbed in the black PET substrate 11 and to the eye the film 30 has a black colouration C. When viewed by eye at angle Ǿ, as in Fig. 3b, the IR light is polarized and reflected at a coloured wavelength revealing a cross of colour C2 on a black background C.

When viewed using IR sensitive goggles e.g. night vision goggle, normal to the surface and using LH and RH polarizers the film laminate 30 is shown with a cross on its surface. Under the LH polarizer the cross will appear one colour C2 on a different coloured background C3. Under, the RH polarizer, the cross will be a black colour C on a different coloured back ground C4. At the angle Ǿ, when viewed under a LH or RH polarizer the surface appears as a uniform dark grey/black colouration with no cross.

Yet another effect may be achieved in a different embodiment shown in Fig 4, in which a film laminate 40 is the similar to the film laminate 30, except that the aluminium layer 42 included non-metallized or de-metallized areas 44 which are aligned with one side of the cross. In this arrangement the views by the naked eye are the same as for Fig. 3. Using night goggles, the views of the surface are also as before except under a RH polariser and at high angles Ǿ, the black cross appears to merge into a black area.

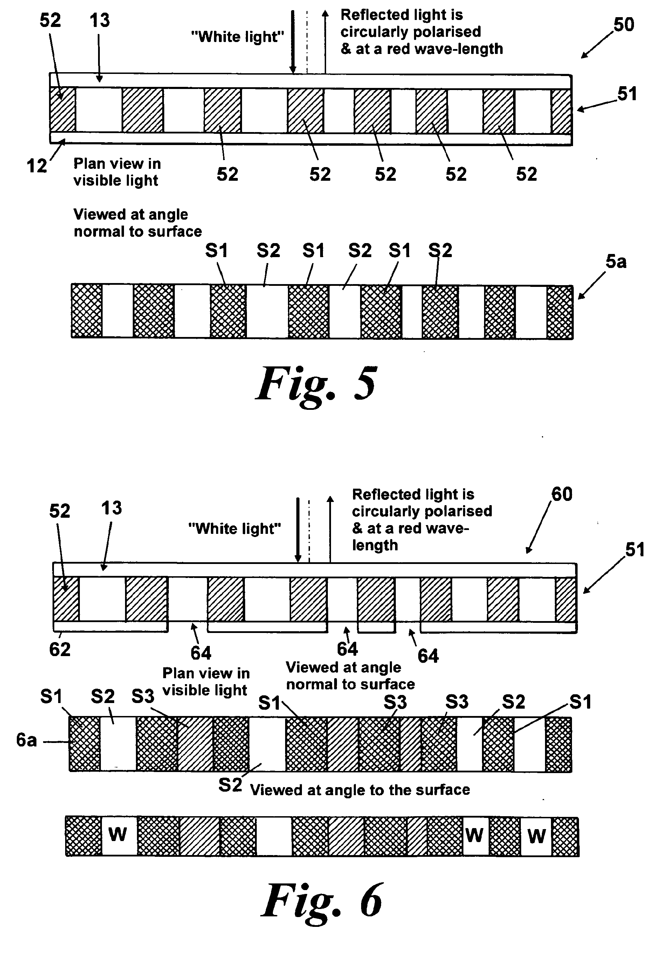

Yet another embodiment is shown in Fig.5, in which a security film laminate 50 is substantially similar to that shown in Fig.1 excepting that the film substrate 51 comprises PET film dyed black in specific area for example in stripes 52. When viewed by eye under white light normal to the surface, and as shown in 5a, the CLC layer 13 will reflect red light which will be clearly visible over the black stripes 52. The reflected red light will be hardly visible against the clear PET. The surface will therefore appear as dark and light stripes S1 and S2 respectively. There will also be additional effects from angle dependant colours.

With reference now to Fig.6, a security film laminate 60 is substantially similar to the film laminate 50 shown in Fig.5, excepting that the aluminium layer 62 comprises non-metallised areas that register with the black dyed stripes. Under white light and viewed by eye, and as shown in 6a, in areas where there is no black dye and no aluminium layer, the transmitted colour through the CLC layer 13 would be dominant, depending on what is below the film. This will give an additional colour stripe S3. The colours of the stripes S1,S2, & S3 may also change with viewing angle as shown in 6b

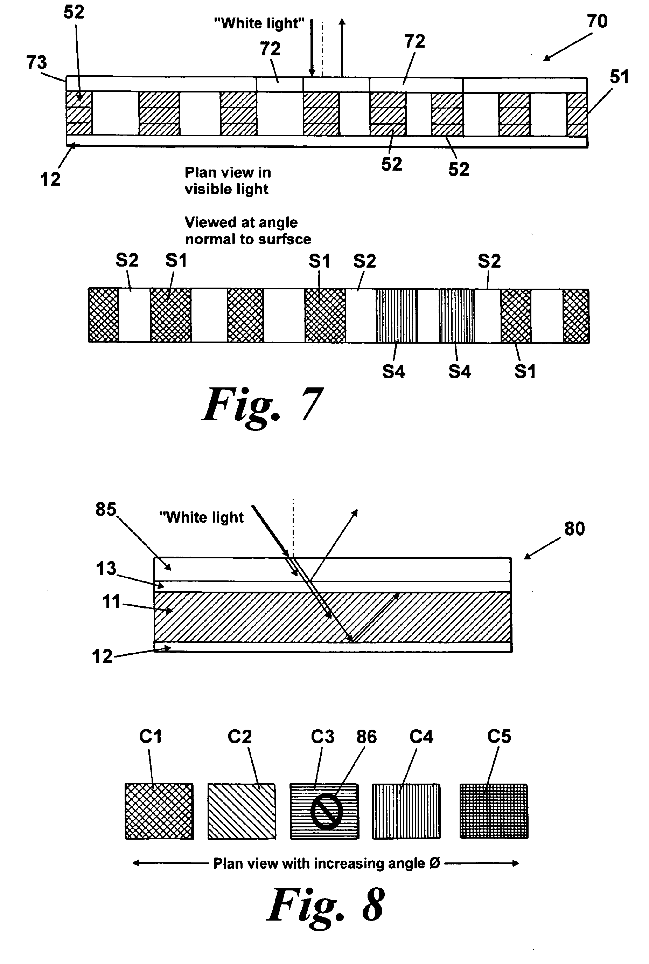

Fig.7 illustrates a security film laminate 70 which is similar to the film laminate 50 shown in Fig.5, excepting that the CLC layer 73 is in pattern form having uncovered areas 72. This will result in additional black striped areas S4 where the black areas of the PET film 51 are exposed.

The embodiment shown in Fig 8 is a security film laminate 80 similar to the film laminate 10 shown in Fig. 1, excepting that the CLC layer 13 is covered with a protective PET over layer 85, to protect against abrasion, exposure to sunlight, or other damaging environments. The over layer 85 may itself carry security feature, for example it be pattern impregnated with UV absorber or notch dye.

As is shown in 8a, the appearance of the surface may pass through several colour changes C1-C5 with increasing viewing angle Ǿ. At a particular angle the incident light I and reflected light R are absorbed by a notch dye in the overlayer 85 so that a security symbol 86 may be observed.

The security film 10 is made by taking the already black dyed and metallized (BDM) film which was then coated with various CLC coatings on the dyed film surface using the following process. Laboratory samples were prepared on hand sheets of BDM film using draw down rods (Myers rods) to deposit coatings of various thickness. The coatings were allowed to dry under ambient laboratory conditions or placed in a circulating air oven at 50C for 30 seconds before UV curing on a Fusion Systems Laboratory belt curer (300 W / inch lamps) at various speeds. The coated films were then examined visually for appearance and colour shift and reflectance properties measured using a Cary 5 Spectrophotometer. Adhesion of the coatings to the film substrate was measured using cross hatch and tape adhesion testing.

The optimization of the coating, drying and curing processes are dependent on the nature of CLC materials, the type and concentration of solvent used in the CLC coating, the thickness of the substrate and power of the UV lamps and curing speed. Using the 2 mil BDM film described above and the CLC coatings RMS05 - 133 and RMS05 - 159 from Merck Chemicals supplied as 45 wt% solutions in ethyl acetate, crystallisation and film formation took place under ambient conditions immediately following a draw down. No oven drying or annealing was necessary in this case. Evidence for crystallisation on drying was the formation of a highly coloured reflective appearance.

For other film substrates it was sometimes necessary to try to improve the order or quality of the structure of the CLC coating by careful annealing at about 50 - 55C. Care must be exercised to avoid overheating of the CLC coating such that the transition temperature into an isotropic (non - reflective) state is reached. This is especially important during the UV curing step. UV lamps emit a lot of energy in the visible and IR as well as in the UV ranges. The BDM film absorbs strongly in the visible wavelengths and so the film and CLC coating heat up rapidly during UV curing. If the coating spends too long a period under the lamps and goes into the isotropic state before or during UV curing then it will not be able to reassemble into a CLC morphology and angle dependent colour reflection will be greatly diminished or lost.

By comparing the appearance of CLC coated films as cast and after UV curing it is possible optimise the belt speed that produces the best combination of properties from the standpoint of UV cure reaction (hardness, adhesion etc) and optical properties (intensity of reflected colour).

Results obtained for coatings prepared from RMS05 - 133 and RMS05 - 159 and mixtures of these two coatings are given in the Tables 1-3 below.

Table 1 and Table 2 relate to the CLC Coating layer 13 comprising RMS05 - 133 and RMS05-159 respectively, applied at different coating weights on 2 mil BDM film. Samples were allowed to dry at room temperature for ~30 seconds before UV curing at 120 feet/minute (36.7 m/min).

**Table 1**

| **Rod #** | **Approx. dtf (microns)** | **λ_{max.Refl.} (nm)** | % **Reflection** | **Colour shift from normal to high high angle view** |
|---|---|---|---|---|
| 3 | 2 - 3 | 620 | 18 | Red - orange to emerald green |
| 4 | 3 - 4 | 635 | 21 | Red - orange to emerald green |
| 5 | 4 - 5 | 635 | 11 | Orange - red to blue - green |
| 6 | 5 - 6 | 600 - 620 v. broad | 12 | Slightly milky orange - red to blue - green |

| | | | | |
|---|---|---|---|---|
| Dft = dry film thickness | | | | |

**Table 2**

| **Rod #** | **Approx. dft (microns)** | **λ_{max.Refl.} (nm)** | **% Reflection** | **Colour shift from normal to high high angle view** |
|---|---|---|---|---|
| 3 | 2 - 3 | 430 | 18 | Indigo - blue to black (colourless) |
| 4 | 3 - 4 | 435 | 21 | Indigo - blue to black (colourless) |
| 5 | 4 - 5 | 400 - 450 v. broad | 11 | Indigo - blue to black (colourless) |
| 6 | 5 - 6 | 400 - 450 v. broad | 12 | Slightly milky indigo - blue to black (colourless) |

Coating weights affect appearance and influence the assembly process of CLC coatings; too heavy a coating weight seems to inhibit crystallisation process so that % reflection decreases and eventually a "milky" or hazy appearance evolves indicating random structures in the coating. The CLC coating thickness should be less than 5.3 microns and preferably between 2.8-5.3 microns.

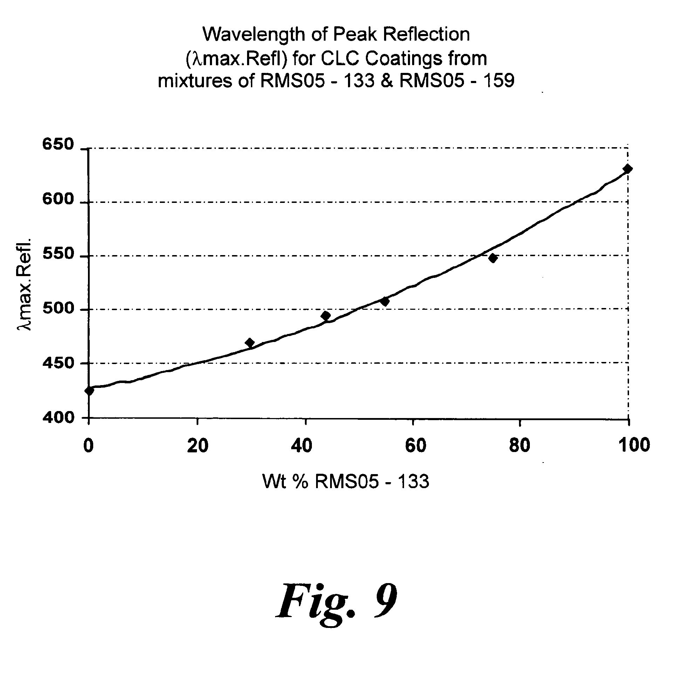

With reference to Table 3 below and to Fig. 9, table 3 relates to the reflective properties of CLC Coatings using different Blends of RMS05 - 133 & RMS05 - 159 coated on BDM film as previously described using a Myers #5 rod. RMS05 - 133 reflects red when viewed normal to the surface and changes to green when viewed obliquely. RMS05 - 159 reflects blue when viewed normal to the surface and changes to colourless (UV) when viewed obliquely.

**Table 3**

| **Composition % RMS05-133** | **λ_{max.Refl.} (nm)** | **% Reflection** | **Colour shift from normal to high high angle view** |
|---|---|---|---|
| 100 | 635 | 11 | Orange red to blue green |
| 75 | 550 | 18 | Yellow green to deep blue |
| 55 | 510 | 17 | Blue green to dark blue |
| 44 | 495 | 18 | Turquoise to blue black |
| 30 | 470 | 8 | Bright blue to v. deep blue black |
| 0 | 425 | 11 | Indigo blue to black / colourless |

The results shown in table 3 are displayed graphically in Fig. 9 and indicate that that the reflected colour shifts in direct relationship to the proportions of the monomers. For example a 3 : 1 mixture of RMS05-133 and RMS05-159 produces a green reflected colour shifting to blue at higher angles of viewing.

Larger scale coating trials were carried out on a 24 inch (600mm) wide pilot coater equipped with a reverse gravure coating station, a low volume 200 TH gravure cylinder, forced air oven and UV curing station. In these experiments CLC coatings RMS05-188, RMS05-159 (from Merck Chemical) and 1 : 1 mixture of these two materials were applied to 2 mil XG200 PET film from Toray at various line speeds and oven temperatures. One batch of PET film had been dyed black from one side and metallized with aluminium on the opposite side (referred to as BDM film). A second batch of film had been dyed in a striped pattern such that black stripes ran down the length of the film (in the machine direction). The reverse side of this film was metallized as above. The appearance of the film from the dyed side was of alternating black and metallic stripes and uniformly metallic from the metallized side (referred to as SBDM). A third roll of film was prepared by treating a BDM sample (on the dyed surface) with PrimeIT adhesion promoter (referred to as PBDM) from CIBA Specialty Chemicals. In all cases the CLC coating was applied to the black dyed or PrimeIT treated black dyed surface. The optical properties were measured as before and the wavelength of peak reflection (λ_{R}), % reflection at λ_{R} and visual appearance noted and these data are recorded in Table 4.

**Table 4**

| CLC Coating | Film | Line Speed (fpm) | Oven temp (F) | Appearnce | λ_{R} (nm) | % R |
|---|---|---|---|---|---|---|
| RMS05-188 | BDM | 100 | 110 | red - green | 640 | 20 |
| RMS05-188 | BDM | 120 | 125 | red-green | 635 | 19 |
| RMS05-159 | SBDM | 80 | 140 | blue-black | 415 | 37 |
| RMS05-159 | SBDM | 60 | 140 | blue-black | 427 | 33 |
| 1:1 '188:'159 | SBDM | 60 | 140 | green-blue | 528 | 25 |
| 1:1 '188:'159 | PBDM | 60 | 140 | green-blue | 515 | 21 |
| 1:1 '188:' 159 | PBDM | 80 | 140 | green-blue | 505 | 13 |

The adhesion of the CLC coatings was measured using cross hatch / tape adhesion testing. The adhesion of the CLC coatings was better on the PrimeIT treated surfaces. Without primer almost 100% of the CLC coating was removed from the BDM film and with primer only 0-5% of the CLC coating was removed from the PBDM film.

The results in Table 4 show that although the CLC coatings can be applied successfully under a range of different conditions (all of the films demonstrated a very clear and spectacular reflected colour and angle dependent shift in colour) coating conditions and coating weight have to be optimised for a given desired coating and reflected colour. The sharpest and most intense reflected colour (by eye and by % reflection) was achieved for the RMS05-159 coating using this particular gravure cylinder and deteriorated somewhat for coatings of increasing longer wavelength reflection. Heavier coating gravure cylinders would be better for the red reflectors. The coatings also experienced less heating during the UV curing step on the pilot coater than on the laboratory bench coater which allowed higher oven temperatures and slower line speeds without adverse affect on the apppearance of the final coatings.

## Claims

1. An optically active film laminate (10) comprising a transparent film substrate (11) which at least in part has been dyed to a dark colouration by dye or dyes applied to one side of the substrate (11), and a CLC coating (13) is layered over said dyed side of the film substrate.

2. A laminate as claimed in Claim 1 wherein the other side of the film (11) has a reflective metallized layer (12) thereon.

3. A laminate as claimed in Claim 2, wherein the metallized layer (12) comprises aluminium or aluminium alloy.

4. A laminate as claimed in any one of Claims 1 to 3, wherein the polymeric film substrate comprises PET (polyethylene terephthalate) film.

5. A laminate as claimed in Claim 4 when dependant upon Claim 2 or Claim 3, wherein the metallized layer (12) is substantially opaque so as to reflect the light back through the polymeric substrate (11) and the PET/alumium layer has a surface resistivity of between 2-3 ohms per square.

6. A laminate as claimed in Claim 5, wherein the PET substrate has been dyed to a dark colouration such that its visible light transmission is no greater than 5%.

7. A laminate as claimed in Claim 5 or Claim 6, wherein the PET film substrate that has been coloured through a surface impregnation dyeing process.

8. A laminate as claimed in Claim 7, wherein the black/grey colouration results from a mixture of red, blue and yellow dyes

9. A laminate as claimed in any one of Claims 1 to 8, wherein the CLC coating has a dry film thickness of up to 6.5 microns in thickness.

10. A laminate as claimed in any one of Claims 1 to 9, wherein the dye is impregnated into the whole surface of the film substrate (11) and the CLC coating (33) is formed on the surface of the dyed substrate (11) in patterns or specified forms.

11. A laminate as claimed in Claim 9 when dependant upon Claim 3, wherein the aluminium layer (42) is a non-continuous layer and interruptions (44) in the reflective aluminium layer (42) align with portions of said pattern or form in the CLC coating (33).

12. A laminate as claimed in any one of Claims 1 to 9, wherein substrate (51) at least in part has been dyed to a dark colouration by dye or dyes applied to said one side in a specified form and/or pattern (52), and the CLC coating (13) is in the form of a continuous coating.

13. A laminate as claimed in Claim 12 when dependant upon Claim 3 or any one of Claims 4 to 9 when depending from Claim 3, wherein the aluminium layer (62) is a non-continuous layer and interruptions (64) in the reflective aluminium layer (62) align with portions of said pattern or form (52) in the dyed substrate (51).

14. A laminate as claimed in any one of Claims 1 to 9 when dependant upon Claim 3 or any one of Claims 4 to 9 when depending from Claim 3, wherein comprising a transparent film substrate (51) which at least in part has been dyed to a dark colouration by dye or dyes applied to said one side in a specified form and/or pattern (52), and a CLC coating (73) is formed on the surface of the dyed substrate (51) in patterns or specified forms (72) which are in register with the dyed patterns on the substrate (51).

15. A laminate as claimed in Claim 3 or any one of Claims 4 to 9 when depending from Claim 3, wherein the CLC coating (13) is formed as a continuous layer on said dyed side of the film substrate (11) and the CLC coating (13) is provided with a transparent polymeric overlayer (85) which may be impregnated with patterns or specific signs.

16. A method of manufacture of an optically active film composite in which method:
a transparent film substrate (11) is dyed by surface impregnation on one side thereof to a dark colouration,
a liquid composition containing chiral monomers is coated over the dyed side of the substrate (11), and the coating (13) dried and cured

17. A method as claimed in Claim 16 wherein the film substrate (11) is dyed to a black colouration using red, blue and yellow dyes.

18. A method as claimed in Claim 16 or Claim 17, wherein the film substrate (11) is covered on its other side by a reflective metallized layer (12) deposited by vacuum deposition.
